# EUROPEAN PATENT SPECIFICATION

(11) **EP 1 428 857 B1**
(45) Date of publication and mention of the grant of the patent: **31.01.2007**
(21) Application number: 02293103.4
(22) Date of filing: 13.12.2002
(51) Int. Cl.: C08L 79/02, C08L 27/12, C08L 27/16, C08L 27/18, C08L 27/20, H01B 1/12

(54) **Process to make a conductive composition of a fluorinated polymer which contains polyaniline**
Verfahren zur Herstellung einer leitfähigen Zusammensetzung von fluoriertem Polymer enthaltend Polyanilin
Procédé de préparation d'une composition conductrice d'un polymère fluoré contenant de la polyaniline

(43) Date of publication of application: 16.06.2004
(73) Proprietor: Arkema France, 92800 Puteaux (FR)
(72) Inventor: Korzhenko, Alexander, 27800 Saint Victor D'Epine (FR); Pud, Alexander, Institute of Bioorganic Chemistry, Kyiv-94, 02094 Ukraine (UA); Shapoval, Galina, Institute Bioorganic Chemistry, Kyiv-94, 02094 Ukraine (UA)
(74) Representative: Neel, Henry

(56) References cited:
- US-A- 5 286 413
- US-B1- 6 235 220

## Description

### [Field of the invention]

Conducting polyvinylidene fluoride (PVDF) compositions have a wide potential use in different practically important fields (antistatic and shielding materials, conducting coatings, membranes, battery electrodes, printer rolls, etc.). In industry in most cases essential conductivity of such composites is achieved due to addition of a high quantity (~16%) of inorganic fillers (soot, graphite, metal powders, etc.) to a polymer matrix. In the issue, their mechanical properties are strongly deteriorated in comparison with parent polymers, specifically with PVDF. This highly narrows scopes of the compositions use and moves the important scientific and commercial problem of their improvement on a paramount level. Its solution can be achieved both through a decrease of conducting fillers quantity and a change of their nature. One of the most perspective ways here is a use of intrinsically conducting polymers, specifically polyaniline (PANI), polythiophene, polypyrrole and their derivatives as the fillers, which have much better specific features and are more compatible with a matrix polymer than inorganic fillers.

Among these polymers PANI is known as the most stable and probably the cheapest one. As a consequence, it and its conducting PVDF compositions can be considered as having a good potential to change inorganic fillers for the industrial applications. However, to apply these materials for practice there is a necessity to develop their compositions and methods for producing the same, which are technologically suitable.

Briefly, the compositions of the present invention are made by polymerization of an anilinium salt in the presence of a fluorinated polymer dispersed in water. Then water is removed, the remaining powder is melted and shaped in films, pellets or any object.

### [Prior Art and the Technical Problems]

Currently, different ways have been already described in the prior art to make conductive compositions which contain polyaniline. These compositions are often described as a polymer matrix containing doped PANI (polyaniline). The term polyaniline covers a whole range of polymers made from aniline and aniline derivatives. The term "doped" polyaniline as used herein is understood to refer to the conductive emeraldine salt form of polyaniline as opposed to the neutral emeraldine base form which is non-conductive. Starting with the insulating emeraldine base form, polyaniline can be rendered conducting through two independent doping routes:
Oxidation either electrochemically (by means of an electrochemical charge transfer reaction) or chemically (by means of chemical reaction with an appropriate oxidizing agent such as (NH₄)₂S₂O₈, K₂S₂O₈, FeCl3, etc).
Protonation through acid-base chemistry by exposure to protonic acids (for example, in aqueous environment with pH less than 2-3).

These two different routes lead to distinctly different final states. The oxidation causes a change in the total number of π-electrons on the conjugated chain and thereby renders it conductive. The protonation gives no change in the number of electrons, the material is rendered electrically conductive by protonation of the imine nitrogen sites.

The patent **US 6235220** concerns compositions for manufacturing composite materials containing a polyaniline. These compositions are formed by a solution in a solvent such as m-cresol of the following constituents: a) a conductive polyaniline protonated by means of a protonation agent able to promote the dissolution of the polyaniline in the solvent, for example phenylphosphonic acid, b) an insulating polymer chosen for example from amongst the cellulosic polymers and polyvinyl chlorides such as cellulose acetate, and c) an insulating plasticiser such as a mixture of dimethyl phthalate, diethyl phthalate and triphenyl phosphate. By pouring this solution and evaporating the solvent, it is possible to obtain a flexible film of conductive composite material having good electrical and mechanical properties. It does'nt disclose fluorinated polymers.

Similar prior arts describe compositions produced by counterion-induced processibility way, which is based on the use of the mixed solution of doped PANI or its derivatives and matrix polymer in m-cresol, toluene, chloroform, dimethylacetamide etc. (Y. Cao, P. Smith, A.J. Heeger, Synth. Met., 48, 91, 1992, Mattoso and Malmonge, Polymer, 40, 513, 1999). Other prior arts describe solution blending mainly in N-methylpyrrolidone of undoped PANI with some polymers (Y. Cao, P. Smith, A. Heeger, Polymer, 30, 2305, 1989.) followed by a solution casting/spraying and removing the solvent from the articles. These techniques have opened the possibility to produce conducting PANI composites. However, they require solubility of doped PANI and matrix polymer in the same solvent. As a consequence they can be applied only to a limited number of polymers.

The patent **US 5928565** describes an electrically conducting plastic material produced by blending a polyaniline or a derivative thereof with an organic sulfonic acid or a derivative thereof. A reaction product or blend of a polyaniline or a derivative thereof with an organic sulfonic acid or a derivative thereof can be brought to an easy-to-handle or directly melt-processable form through a heat-treatment process carried out at approx. +40°C to +250°C. The obtained plastic material is advantageously further improved by blending the heat-treated reaction product or blend with a thermoplastic polymer and then melt-processing the mixed blend. The properties of the resulting compound material exhibit complete compatibility of the heat-treated reaction product or blend with the thermoplastic polymer. It does't disclose fluorinated polymers.

Other similar prior art describe composites produced by dry blending technique through mechanical mixing of doped PANI with a thermoplastic polymer followed by melt processing, then compression, extrusion or injection molding (e.g. Morgan et al., J. Mater. Sci. 36, 5369, 2001; Zilberman et al. J. Appl. Pol. Sci. 66, 243, 1997; WO 9920685). However it requires previous synthesis of PANI and its redoping by functionalized protonic acids.

The patent **US 5508348** describes a composite formed wherein particles of a conductive polymer are uniformly distributed within a processable non-conductive polymer. In the method of the invention, an inverted emulsion is formed by dispersing an aqueous solution of oxidant in an organic solvent comprising a host polymer and an oil-soluble surfactant. A monomer whose polymerization yields a conductive polymer which is dissolved in a solvent miscible with the organic solvent of the emulsion is then added dropwise to the emulsion with agitation. The composite is separated from the emulsion and the precipitate is washed and dried. It does'nt disclose fluorinated polymers.

Other similar prior art describe emulsion latex compositions produced by emulsion polymerization or co-polymerization of aniline in a presence of a stabilizer, a matrix polymer or corresponding monomer in a non-aqueous phase dispersed in water. It is followed by a treatment of the latex composition obtained to produce a conducting composite article. This way also allows doped conducting PANI composites. However, preparation of the latex composition normally goes through two steps giving conducting phase with polyaniline doped by thermally unstable HCl (patent EP 1061530-A1), that requires an additional stage of redoping by other thermally stable dopants to use melting treatment of the composite produced from the latex. The way is limited by nature of an insulating matrix polymer or corresponding monomer, which should be dissolved in the solvents used.

The patent **US 5494609** describes an electrically conductive coating composition including an intrinsically conductive polymer dispersed in a film-forming thermoplastic matrix. The coating composition also includes at least one organic solvent capable of dissolving the dispersion. A method according to the invention includes the steps of preparing a dispersion of an intrinsically conductive polymer in a film-forming thermoplastic matrix. The method also includes the steps of dissolving the dispersion in an organic solvent and forming a film from the dissolved dispersion. It does't disclose fluorinated polymers.

Similar prior arts describe dispersion compositions produced both by aniline hydrochloride polymerization in presence of sulfonated or carboxylated polymer dispersions stabilized with surfactant (e.g. Kim et al. Polymer, 43, 111, 2002) and by suspending previously synthesized polyaniline in polymer dispersion/solution in organic/water continuous phase stabilized with a surfactant (JP 08120167, JP 08-057411). In the case of aniline polymerization in the polymer dispersions the way is limited by use of polymer with acidic function and the thermally unstable dopant HCl as well as by necessity of a surfactant addition. As a consequence, these drawbacks lead to subsequent redoping of polyaniline formed and do not allow modification of polymers without acidic function. On the other hand suspending of PANI in a polymer dispersion/solution requires both organic solvents, which are not always technologically suitable and previous synthesis of PANI that is not always applicable by a cost reason.

The patent application **WO 9837964 (PCT/US98/03424)** relates generally to composites and, more particularly, to polymer composites containing inorganic or organic materials disposed in the polymer's free volume and to oxyhalopolymer composites and surface-oxyhalogenated nonhalopolymer composites, and to methods of making and using same.

It also relates to a method for making a composite. A polymer having free volume therein is provided. The free volume of the polymer is evacuated, and inorganic or organic molecules are infused into the polymer's evacuated free volume. In a particularly preferred embodiment of the present invention, the inorganic or organic molecules are then polymerized under conditions effective to assemble the inorganic or organic molecules into macromolecular networks. In an alternative particularly preferred embodiment of the present invention the polymer comprises a functionality, and the inorganic or organic molecules are treated under conditions effective to cause the inorganic or organic molecules to interact with the polymer's functionality.

In addition, composites of this prior art can have a surface which optionally contains halogen atoms, a portion of which have been replaced with hydrogen atoms and oxygen atoms or oxygen-containing groups. The oxyhalopolymer surface retains many of the positive attributes characteristic of halopolymer surfaces, such as tendency to repel water and other polar solvents, high thermal stability, and low adhesion and friction coefficients. However, unlike halopolymer surfaces, the surfaces of the oxyhalopolymer composites of this prior art have reactive chemical sites which permit bonding with other chemical functionalities, such as organosilicons, organometallic precursors, transition metal ions and compounds, transition metal films, fluorescent compounds and other dyes, and biological materials, such as proteins, enzymes, and nucleic acids. In addition, by proper choice of the infused inorganic material and chemical functionality at the surface, polymer composites having an inorganic surface which is the same as, silmilar to, or different from the infused inorganic material can be prepared. Such materials are useful, for example, in preparing metal oxide/fluoropolymer composites having a pure metal oxide surface. The description recites fluorinated polymers and aniline as the monomer to be polymerized in the free volume of the fluorinated polymer but there is no example and no description of the use as a conductive polymer. Moreover the fluorinated polymer is not in an aqueous dispersion.

### [Brief description of the invention]

The process of the present invention is a process to make a conductive fluorinated polymer composition (also called composite) wherein :
a) an aqueous solution of an anilinium salt is mixed with an aqueous dispersion of a fluorinated polymer,
b) then an oxidant is added to the mixture of step a) to make a blend of said fluorinated polymer and doped polyaniline (PANI),
c) by-products and unreacted aniline are removed by washing with water or an alcohol to get a blend of purified fluorinated polymer and doped PANI,
d) optionally the purified fluorinated polymer and doped PANI of step c) can be mixed with an acid,
e) water is removed from the purified fluorinated polymer and doped PANI of step c) or d) if any and the remaining powder is melted and shaped in films, pellets or any object.

### [Detailed description of the invention]

**As regards the fluorinated polymer,** any polymer is denoted which has in its chain at least one monomer chosen from compounds containing a vinyl group capable of opening to polymerize and which contains, directly attached to this vinyl group, at least one fluorine atom, a fluoroalkyl group or a fluoroalkoxy group.

Examples of monomers which may be mentioned include vinyl fluoride; vinylidene fluoride (VF2); trifluoroethylene (VF3); chlorotrifluoroethylene (CTFE); 1,2-difluoroethylene; tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE) and perfluoro(propyl vinyl)ether (PPVE); perfluoro(1,3-dioxole); perfluoro(2,2-dimethyl-1,3-dioxole) (PDD); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)nCH₂OCF=CF₂ in which n is 1, 2, 3, 4 or 5; the product of formula R1CH₂OCF=CF₂ in which R1 is hydrogen or F(CF₂)z and z is 1, 2, 3 or 4; the product of formula R3OCF=CH₂ in which R3 is F(CF₂)z- and z is 1, 2, 3 or 4; perfluorobutylethylene (PFBE); 3,3,3-trifluoropropene and 2-trifluoromethyl-3,3,3-trifluoro-1-propene.

The fluorinated polymer may be a homopolymer or a copolymer, and may also comprise non-fluoro monomers such as ethylene.

The fluorinated polymer may be a thermoplastic or an elastomer or a thermoplastic elastomer.

The fluorinated polymer is advantageously chosen from:
- Vinylidene fluoride (VF2) homopolymers and copolymers preferably containing at least 50% by weight of VF2, the copolymer being chosen from chlorotrifluoroethylene (CTFE), hexafluoropropylene (HFP), trifluoroethylene (VF3) and tetrafluoroethylene (TFE),
- trifluoroethylene (VF3) homopolymers and copolymers,
- copolymers, and in particular terpolymers, combining residues of chlorotrifluoroethylene (CTFE), tetrafluoroethylene (TFE), hexafluoropropylene (HFP) and/or ethylene units and optionally VF2 and/or VF3 units.

Preferred fluorinated polymer is a PVDF homopolymer or a PVDF copolymer containing at least 85% by weight of VF2 and more preferably 90%.

The aqueous dispersion of the fluorinated polymer can be made by any means but advantageously it is recovered during the synthesis of the fluorinated polymer. For example as regards PVDF, it is usually made by polymerization of VF2 and comonomer, if any, in suspension or emulsion in water. The aqueous dispersion of the fluorinated polymer is recovered as a step of its synthesis.

Aqueous dispersion of the fluorinated polymer may contain from 10 to 50% by weight of fluorinated polymer. Advantageously the dispersion comes from the polymerization process in emulsion.

**As regards the aqueous solution of the anilinium salt it is made by mixing aniline, water and an acid.** Operating conditions of this reaction are not critical and can vary widely. This reaction can be made at any pressure but it's easier to operate at atmospheric pressure. The temperature can be maintained in the range from 0 °C to 80 °C preferably in the range from 5 °C to 10 °C. Should proportion of acid is over the stoechiometry the aqueous solution of anilinium salt is called acidified.

**As regards aniline** it could be aniline or substituted aniline of formula (1) 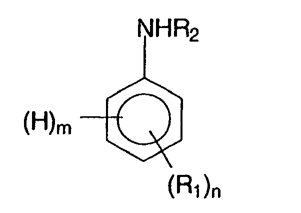 wherein:
n is an integer from 0 to 5;
m is an integer from 0 to 5, with the proviso that the sum of n and m is equal to 5 and with the further proviso that at least one position on the aniline ring, preferably at the para position, is substituted with a substituent which will allow coupling of the aniline units such halo, hydrogen or other leaving group;
R₁ is the same or different at each occurrence and is selected from the group consisting of alkyl, deuterium, alkenyl, alkoxy, cycloalkyl, cycloalkenyl, alkanoyl, alkylthio, aryloxy, alkylthioalkyl, alkylaryl, arylalkyl, amino, alkylamino, dialkylamino, arylamino, diarylamino, alkylarylamino, aryl, alkylsulfinyl, aryloxyalkyl, alkylsulfinylalkyl, alkoxyalkyl, phosphonic acid, alkylsulfonyl, arylthio, alkylsulfonylalkyl, boric acid, phosphoric acid, sulfinate salts, arylsulfinyl, alkoxycarbonyl, arylsulfonyl, carboxylic acid, phosphonic acid, halo, hydroxy, cyano, sulfinic acid, carboxylate salts, borate salts, phosphate salts, sulfonate salts, phosphinate salts, phosphonate salts, phosphonic acid, sulfonic acid, nitro, alkylsilane, or any of the foregoing aryl, aliphatic or cycloaliphatic groups substituted with one or more phosphonic acid, sulfonic acid, phosphoric acid, boric acid, carboxylate salt, borate salt, sulfonate salt, phosphinate salt, phosphonate salt, phosphate salt, phosphinic acid, carboxylic acid, halo, nitro, amino, alkylamino, dialkylamino, arylamino, diarylamino, alkylarylamino, cyano or epoxy moieties; or any two R₁ groups together or any R₂ group together with any R₂ group may form a substituted or unsubstituted alkylene, alkenylene or alkynylene chain completing a 3, 4, 5, 6, 7, 8, 9 or 10 membered aromatic, heteroaromatic, heteroalicyclic or alicyclic ring, which ring may optionally include one or more divalent nitrogen, sulfur, sulfinyl, ester, carbonyl, sulfonyl, or oxygen atoms wherein permissible substituents are one or more phosphonic acid, sulfonic acid, phosphoric acid, boric acid, carboxylate salt, borate salt, sulfonate salt, phosphinate salts, phosphonate salt, phosphate salt, phosphinic acid, carboxylic acid, halo, nitro, amino, alkylamino, dialkylamino, arylamino, diarylamino, alkylarylamino, cyano or epoxy moieties; or R₁ is an aliphatic moiety having repeat units of the formula:

   --(OCH2CH2)_{q}O-CH3

   --(OCH2CH(CH3))_{q}O-CH3

   --(CH2)_{q}CF3

   --(CF2)_{q}--CF3

   -(CH2)_{q}-CH3
wherein q is a positive whole number; and R₂ is selected from the group consisting of permissible R₁ or substituents hydrogen.

The following listing of substituted and unsubstituted anilines are illustrative of those which can be used to prepare polymers and copolymers useful in the practice of this invention :
2-Cyclohexylaniline, 2-Acetylaniline, Aniline, 2,5-Dimethylaniline, o-Toluidine, 2,3-Dimethylaniline, 4-Propanoylaniline, 4-Benzylaniline, 2-(Methylamino)aniline, 4-Aminoaniline, 2-(Dimethylamino)aniline, 2-Methylthiomethylaniline, 2-Methyl-4-methoxy-carbonylaniline, 4-(2,4-Dimethylphenyl)aniline, N-Ethylaniline, 2-Ethylthioaniline, 4-Carboxyaniline, N-Methyl aniline, N-Methyl aniline, N-Propyl-m-toluidine, 2,4-Dimethylaniline, N-Methyl-o-cyanoaniline, N-Propyl aniline, 2,5-Dibutylaniline, N-Hexyl aniline, 2,5-Dimethoxyaniline, m-Toluidine, Tetrahydronaphthylamine, o-Ethylaniline, o-Cyanoaniline, m-Ethylaniline, 2-Methylthioaniline, o-Ethoxyaniline, 2,5-Dichloroaniline, m-Butylaniline, 3-(n-Butanesulfonic acid) aniline, m-Hexylaniline, m-Octylaniline, 3-Propoxymethylaniline, 4-Bromoaniline, 2,4-Dimethoxyaniline, 2-Bromoaniline, 4-Mercaptoaniline, 3-Bromoaniline, 4-Ethylthioaniline, 3-Acetamidoaniline, 3-Phenoxyaniline, 4-Acetamidoaniline, 4-Phenoxyaniline, 5-Chloro-2-methoxy-aniline, N-Octyl m-toluidine, 5-Chloro-2-ethoxy-aniline, 4-Trimethylsilylaniline, N-Hexyl-m-Toluidine, 3-Amino carbazole, 4-Phenylthioaniline, N-(p-Amino phenyl) aniline, 3-Amino-9-methylcarbazole, 4-Amino carbazole.

**As regards the acid to make the anilinium salt** it could be choosen among the following acids of formula (2) A-R₃ and (3) 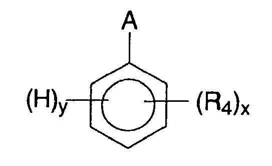 wherein: A is sulfonic acid, selenic acid, phosphonic acid or a carboxylic acid group; or hydrogen sulfate, hydrogen selenate, hydrogen phosphate;
x is an integer from 0 to 5;
y is an integer from 0 to 4 with the proviso that the sum of x and y is 5;
R₃ is alkyl, alkenyl, alkoxy, alkanoyl, alkylthio, alkylthioalkyl, having from 1 to about 20 carbon atoms; or alkylaryl, arylalkyl, alkylsulfinyl, alkoxyalkyl, alkylsulfonyl, alkoxycarbonyl, carboxylic acid, where the alkyl or alkoxy has from 0 to about 20 carbon atoms; or alkyl having from 3 to about 20 carbon atoms substituted with one or more sulfonic acid, carboxylic acid, halogen, nitro, cyano, diazo, or epoxy moieties; or a substituted or unsubstituted 3, 4, 5, 6 or 7 membered aromatic or alicyclic carbon ring, which ring may include one or more divalent heteroatoms of nitrogen, sulfur, sulfinyl, sulfonyl or oxygen such as thiophenyl, pyrolyl, furanyl, pyridinyl.
In addition to these monomeric acid forms, R₃ can be a polymeric backbone from which depend a plurality of acid functions "A." Examples of polymeric acids include sulfonated polystyrene, and sulfonated polyethylene. In these cases the polymer backbone should be selected to be soluble in the nonpolar organic solvent (plasticizer) such that highly polar polymers, for example polyacrylic acid or poly(vinylsulfonate) are usually not preferred.
R₄ is the same or different at each occurrence and is alkyl, alkenyl, alkoxy, cycloalkyl, cycloalkenyl, alkanoyl, alkylthio, aryloxy, alkylthioalkyl, alkylaryl, arylalkyl, alkylsulfinyl, alkoxyalkyl, alkylsulfonyl, aryl, arylthio, arylsulfinyl, alkoxycarbonyl, arylsulfonyl, carboxylic acid, halogen, cyano, or alkyl substituted with one or more sulfonic acid, carboxylic acid, halogen, nitro, cyano, diazo or epoxy moieties; or any two R substituents taken together are an alkylene or alkenylene group completing a 3, 4, 5, 6 or 7 membered aromatic or alicyclic carbon ring or multiples thereof, which ring or rings may include one or more divalent heteroatoms of nitrogen, sulfur, sulfinyl, sulfonyl or oxygen. R₄ typically has from 1 to 20 carbons especially 3 to 20 and more especially from 8 to 20 carbons.

Preferred for use in the practice of this invention are acid of the above Formulas (2) and (3) in which:
A is sulfonic acid, phosphonic acid or carboxylic acid;
x is an integer from 1 to 5;
y is an integer from 0 to 4 with the proviso that the sum of x and y is 5;
R₃ is alkyl, alkenyl, alkoxy, alkanoyl, alkylthio, alkylthioalkyl, having from 5 to about 16 carbon atoms; or alkylaryl, arylalkyl, alkylsulfinyl, alkoxyalkyl, alkylsulfonyl, alkoxycarbonyl, carboxylic acid, where the alkyl or alkoxy has from 1 to about 20 carbon atoms; or alkyl having from 3 to 20 carbon atoms substituted with one or more sulfonic acid, carboxylic acid, halogen, nitro, cyano diazo, or epoxy moieties;
R₄ is the same or different at each occurrence and is alkyl, alkenyl, alkoxy, arylalkyl, alkylsulfonyl, alkoxycarbonyl or carboxylic acid having from 1 to 12 carbon atoms, or alkyl substituted with one or more carboxylic acid, halogen, diazo or epoxy moieties.

Particularly preferred for use in the practice of this invention are acid of the above Formulas (2) and (3) in which:
A is sulfonic acid or carboxylic acid;
x is an integer from 1 to 3;
y is an integer from 0 to 4 with the proviso that the sum of x and y is 5;
R₃ is alkyl, alkenyl, alkoxy, having from 6 to about 14 carbon atoms; or arylalkyl, where the alkyl or alkyl portion or alkoxy has from 4 to 14 carbon atoms; or alkyl having from 6 to 14 carbon atoms substituted with one or more, carboxylic acid, halogen, diazo, or epoxy moieties;
R₄ is the same or different at each occurrence and is alkyl, alkoxy, alkylsulfonyl, having from 1 to 14 carbon atoms, or alkyl substituted with one or more halogen moieties again with from 4 to 14 carbons in the alkyl.

More preferred acids are p-toluene sulfonic acid, dodecylbenzene sulfonic acid, naphtalenedisulfonic acid and naphtalene sulfonic acid.

The aqueous solution of the anilinium salt may contain 5 to 40% by weight of anilinium salt and from 0 to 2 moles per liter of free acid (the acid mixed with the aniline to make the anilinium salt). The proportions of anilinium salt may be, by weight, 0,1 to 15% per 99,9 to 85%, respectively, of fluorinated polymer.

**As regards the step b) and the oxidant** it could be any oxidant provided it makes the doped PANI. Advantageously it is choosen among oxidants soluble in water. The oxidant may be a persulfate, a permanganate, a bichromate, a chromate or hydrogen peroxide. Preferred oxidant is ammonium persulfate or potassium persulfate or sodium persulfate. Proportion of said oxidant should be enough to make the polymerization of aniline and is determined by the man skilled in the art. The oxidant may be in the form of an aqueous solution. Such solution may contain, by weight, from 1 to 60% oxidant. It is recommanded after step a) before step b) to wait a time enough for absorption of the anilinium salt on the surface of the particules of the fluorinated polymer. This time is around 20 minutes to 2 h. Operating conditions of this step b) are not critical and can vary widely. This reaction can be made at any pressure but it's easier to operate at atmospheric pressure. The temperature may be in the range 0 to 80°C.

**As regards the step c)** the alcohol is advantageously soluble in water and may be choosen among methanol and ethanol. The washing is made with enough water and/or alcohol and during a time enough to remove all by-products and unreacted aniline. It can be followed by checking the composition of the water and/or alcohol recovered at the outlet of the washing. Operating conditions of this step c) are not critical and can vary widely. This reaction can be made at any pressure but it's easier to operate at atmospheric pressure. The temperature may be in the range 0 to 80°C.

**As regards the step d),** this addition of the acid can be recommended if the washing of the previous step c) was too strong and had removed some part of the acid dopant, which protonated imine nitrogens of the polyaniline formed at the stage b), and resulted in lowered conductivity of the composite to less than 10⁻⁹-10⁻¹ S/cm. However, if this conductivity is enough to be used in practise, the stage d) is not necessary and can be canceled. In any case, with or without stage d) the conductivity of the fluorinated polymer composite is stable in produced ultimate articles due to the doped polyaniline protection by the fluorinated polymer matrix.

Any acid as cited above to prepare the anilinium salt can be used, advantageously in the present step d) the acid is the same as in the step a). This acid is advantageously added as (preferably 0.1-0.2 M) aqueous or organic (advantageously alcohol) solution which should cover the composite after stage c). Amount of acid to be added in this case is about 1.1-3 molar surplus to the initial quantity of aniline used at the step a). Use of the present step allows to increase conductivity of the final composite article for one to five orders of magnitude comparing to the article without this step.

Operating conditions of this step d) are not critical and can vary widely. This reaction can be made at any pressure but it's easier to operate at atmospheric pressure. The temperature may be in the range from 0 to 80°C. Time of the step may be in the range from 0.5 to 24 hours.

**As regards the step e)** this process is known in itself. Water can be removed by any means such as centrifugation, vacuum drying, atomization or any combination thereof. Then the remaining powder is melted and shaped in films, pellets or any object. It can be made in apparatus in use in the thermoplastics technology such as the mixers, extruders, molding and injection molding equipment.

This ultimate powder composite can be used for melt processing (melt compression, injection, extrusion, etc., at temperatures 175-240 °C to give articles with conductivity in the range 2x10⁻¹² to 2 S/cm. The articles may be printer rollers, pipes, ESD screens, films, heating sheets,...etc.

### [Examples]

### Example 1

At first two aqueous solutions are prepared:
◆ of aniline and p-toluene sulfonic acid (TSA) to give after the base-acid reaction reaction the presence in the solution of 0.5 mol/L (~13.3 wt %) anilinium salt and 0.5 mol/L (~9 wt %) TSA ;
◆ of 0.625 mol/L (~15 wt %) ammonium persulfate
Then 1.3 g of the anilinium salt acidified solution are added when agitation to 13g of the stable PVDF latex (latex Kynar® 9000 manufactured by ATOFINA with 37.45 wt % of the solid PVDF phase). Kynar® 9000 is a PVDF homopolymer having a MVI (melt flow volume index) of 10 cm3/10 min under a load of 5 kg at 230°C. Then to the formed mixture 1.3 g of the ammonium persulfate solution is added stepwise through agitation. The reaction was run for 3 hours at 20 °C. The result is a stable dark-green latex composition.
This final latex composition is washed by water at a filter under a reduced pressure with subsequent placing of the separated blue-green (*slurry*) solids in 0.2 M water solution of TSA for 30 min period at 20 °C followed by washing by a small quantity of water at a filter under a reduced pressure followed by drying. The ultimate dry powder green composite produced contains ~2 wt % of PANIxTSA and ~98% wt % of PVDF. These quantities are approximate because are based on the rough guess that all aniline is completely polymerized to give emeraldine salt with theoretically calculated molar ratio PANI : dopant = 1:0.5.
The ultimate powder composite is used for melt compression at 180 °C to produce a dark green film with conductivity 8x10⁻⁸ S/cm.

### Example 2

This example is performed in similar way to **Example 1** but with a twofold increase of quantity of both the anilinium salt mixed with the latex and the oxidant. Also in addition the oxidant solution is acidified by TSA with the concentration 1 mol/L (~18 wt %). The ultimate dry powder green composite produced of the final latex composition contains ~4 wt % of PANIxTSA and -96% wt % of PVDF.

It is used for melt compression at 180 °C, 200 °C and 220 °C to produce dark green films with conductivity 9.7x10⁻⁴ S/cm, 2.2x10⁻⁵ S/cm and 1.2x10⁻⁶ S/cm correspondingly.

### Example 3

This example is performed in a similar way to **Example 1** but instead of TSA dodecylbenzene sulfonic acid (DBSA) is used. Also, at the stage d) of further use of the final latex composition the separated green (*slurry*) solids are placed in 0.2 M ethyl acetate and/or methanol instead of the water solution of DBSA for 30 min hours period at 50 °C followed by washing by a small quantity of water at a filter under a reduced pressure followed by drying. The ultimate dry powder green composite produced of the final latex composition contains ~3 wt % of PANIxDBSA and ~97 wt % of PVDF.

This ultimate powder composite is used for melt compression at 180 °C to produce a dark green film with conductivity 9x10⁻³ S/cm.

### Example 4

This example is performed in a similar way to **Example 2** but Kynar® 1000 is used instead of Kynar® 9000. Kynar® 1000 is a PVDF homopolymer having a MVI (melt flow volume index) of 1,1 cm3/10 min under a load of 5 kg at 230°C. The Kynar® 1000 latex contains 37.45 wt % of PVDF.

The ultimate dry powder green composite produced of the final dispersion composition contains ~4 wt % of PANIxTSA and ~96 wt % of PVDF. It is used for melt compression at 180 °C, 200 °C and 220 °C to produce dark green films with conductivity 8x10⁻⁴ S/cm, 3.4x10⁻⁵ S/cm and 1x10⁻⁶ S/cm correspondingly.

### Example 5

This example is performed in a similar way to **Example 3** but with the next differences:
1. Kynar® 1000 latex was used, it contains 21.36 wt % of PVDF.
2. The higher quantities of aniline and DBSA were used to give ~4.8 wt. % of PANIxDBSA and ~95.2 wt% of PVDF in the final dispersion composition.
3. Potassium persulfate in the form of 10 wt. % water solution heated to 40 °C was used instead of the ammonium persulfate solution.
4. The reaction was run for 24 hours at ~10 °C.
5. The step d) of additional doping was not used and directly after washing step c) the final latex composition was dried.

The ultimate powder composite was used for melt compression at 200 °C to produce a dark green film with conductivity 0.2 S/cm. Mixing of this powder composite with the pure Kynar® 1000 powder in ratio 1:1 allowed to produce by melt compression at 200 °C a dark green film with conductivity 3.6x10⁻³ S/cm.

## Claims

1. Process to make a conductive fluorinated polymer composition wherein :
a) an aqueous solution of an anilinium salt which is prepared from aniline or a substituted aniline, water and an acid, is mixed with an aqueous dispersion of a fluorinated polymer ;
b) then an oxidant is added to the mixture of step a) to make a blend of said fluorinated polymer and doped polyaniline (PANI);
c) by-products and unreacted aniline are removed by washing with water or an alcohol to get a blend of purified fluorinated polymer and doped PANI ;
d) optionally the purified fluorinated polymer and doped PANI of step c) are mixed with an acid;
e) water is removed from the purified fluorinated polymer and doped PANI of step c) or d) if any and the remaining powder is melted and shaped in films, pellets or any object.

2. Process according to claim 1 wherein the fluorinated polymer is choosen among vinylidene fluoride (VF2) homopolymers and copolymers containing at least 50% by weight of VF2, the copolymer being chosen from chlorotrifluoroethylene (CTFE), hexafluoropropylene (HFP), trifluoroethylene (VF3) and tetrafluoroethylene (TFE).

3. Process according to any one of claims 1 or 2 wherein the substituted aniline is of formula (1) 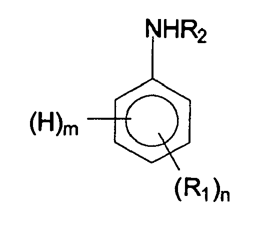 wherein:
• n is an integer from 0 to 5;
• m is an integer from 0 to 5, with the proviso that the sum of n and m is equal to 5 and with the further proviso that at least one position on the aniline ring, preferably at the para position, is substituted with a substituent which will allow coupling of the aniline units such halo, hydrogen or other leaving group;
• R₁ is selected from the group consisting of alkyl, deuterium, alkenyl, alkoxy, cycloalkyl, cycloalkenyl, alkanoyl, alkylthio, aryloxy, alkylthioalkyl, alkylaryl, arylalkyl, amino, alkylamino, dialkylamino, arylamino, diarylamino, alkylarylamino, aryl, alkylsulfinyl, aryloxyalkyl, alkylsulfinylalkyl, alkoxyalkyl, phosphonic acid, alkylsulfonyl, arylthio, alkylsulfonylalkyl, boric acid, phosphoric acid, sulfinate salts, arylsulfinyl, alkoxycarbonyl, arylsulfonyl, carboxylic acid, phosphonic acid, halo, hydroxy, cyano, sulfinic acid, carboxylate salts, borate salts, phosphate salts, sulfonate salts, phosphinate salts, phosphonate salts, phosphonic acid, sulfonic acid, nitro, alkylsilane, or any of the foregoing aryl, aliphatic or cycloaliphatic groups substituted with one or more phosphonic acid, sulfonic acid, phosphoric acid, boric acid, carboxylate salt, borate salt, sulfonate salt, phosphinate salt, phosphonate salt, phosphate salt, phosphinic acid, carboxylic acid, halo, nitro, amino, alkylamino, dialkylamino, arylamino, diarylamino, alkylarylamino, cyano or epoxy moieties; or any two R₁ groups together or any R₂ group together with any R₂ group may form a substituted or unsubstituted alkylene, alkenylene or alkynylene chain completing a 3, 4, 5, 6, 7, 8, 9 or 10 membered aromatic, heteroaromatic, heteroalicyclic or alicyclic ring, which ring may optionally include one or more divalent nitrogen, sulfur, sulfinyl, ester, carbonyl, sulfonyl, or oxygen atoms wherein permissible substituents are one or more phosphonic acid, sulfonic acid, phosphoric acid, boric acid, carboxylate salt, borate salt, sulfonate salt, phosphinate salts, phosphonate salt, phosphate salt, phosphinic acid, carboxylic acid, halo, nitro, amino, alkylamino, dialkylamino, arylamino, diarylamino, alkylarylamino, cyano or epoxy moieties; or R₁ is an aliphatic moiety having repeat units of the formula:
-(OCH₂CH₂)_{q}O-CH₃
-(OCH₂CH(CH₃))_{q}O-CH₃
-(CH₂)_{q}-CF₃
-(CF₂)_{q}-CF₃
-(CH₂)_{q}-CH₃
wherein q is a positive whole number; and R₂ is selected from the group consisting of permissible R₁ or substituents hydrogen.

4. Process according to any one of claims 1 or 2 wherein the substituted aniline is chosen among 2-Cyclohexylaniline, 2-Acetylaniline, Aniline, 2,5-Dimethylaniline, o-Toluidine, 2,3-Dimethylaniline, 4-Propanoylaniline, 4-Benzylaniline, 2-(Methylamino)aniline, 4-Aminoaniline, 2-(Dimethylamino)aniline, 2-Methylthiomethylaniline, 2-Methyl-4-methoxy-carbonylaniline, 4-(2,4-Dimethylphenyl)aniline, N-Ethylaniline, 2-Ethylthioaniline, 4-Carboxyaniline, N-Methyl aniline, N-Methyl aniline, N-Propyl-m-toluidine, 2,4-Dimethylaniline, N-Methyl-o-cyanoaniline, N-Propyl aniline, 2,5-Dibutylaniline, N-Hexyl aniline, 2,5-Dimethoxyaniline, m-Toluidine, Tetrahydronaphthylamine, o-Ethylaniline, o-Cyanoaniline, m-Ethylaniline, 2-Methylthioaniline, o-Ethoxyaniline, 2,5-Dichloroaniline, m-Butylaniline, 3-(n-Butanesulfonic acid) aniline, m-Hexylaniline, m-Octylaniline, 3-Propoxymethylaniline, 4-Bromoaniline, 2,4-Dimethoxyaniline, 2-Bromoaniline, 4-Mercaptoaniline, 3-Bromoaniline, 4-Ethylthioaniline, 3-Acetamidoaniline, 3-Phenoxyaniline, 4-Acetamidoaniline, 4-Phenoxyaniline, 5-Chloro-2-methoxy-aniline, N-Octyl m-toluidine, 5-Chloro-2-ethoxy-aniline, 4-Trimethylsilylaniline, N-Hexyl-m-Toluidine, 3-Amino carbazole, 4-Phenylthioaniline, N-(p-Amino phenyl) aniline, 3-Amino-9-methylcarbazole, 4-Amino carbazole.

5. Process according to any one of the preceding claims wherein the acid of step a) is chosen among the following acids of formula :
(2) A-R₃
and (3) 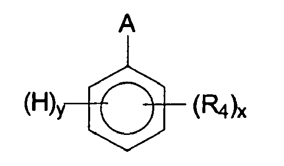 wherein:
• A is sulfonic acid, selenic acid, phosphonic acid or a carboxylic acid group; or hydrogen sulfate, hydrogen selenate, hydrogen phosphate;
• x is an integer from 0 to 5;
• y is an integer from 0 to 4 with the proviso that the sum of x and y is 5;
• R₃ is alkyl, alkenyl, alkoxy, alkanoyl, alkylthio, alkylthioalkyl, having from 1 to 20 carbon atoms; or alkylaryl, arylalkyl, alkylsulfinyl, alkoxyalkyl, alkylsulfonyl, alkoxycarbonyl, carboxylic acid, where the alkyl or alkoxy has from 1 to 20 carbon atoms; or alkyl having from 3 to 20 carbon atoms substituted with one or more sulfonic acid, carboxylic acid, halogen, nitro, cyano, diazo, or epoxy moieties; or a substituted or unsubstituted 3, 4, 5, 6 or 7 membered aromatic or alicyclic carbon ring, which ring may include one or more divalent heteroatoms of nitrogen, sulfur, sulfinyl, sulfonyl or oxygen such as thiophenyl, pyrolyl, furanyl, pyridinyl ;
• R₄ is the same or different at each occurrence and is alkyl, alkenyl, alkoxy, cycloalkyl, cycloalkenyl, alkanoyl, alkylthio, aryloxy, alkylthioalkyl, alkylaryl, arylalkyl, alkylsulfinyl, alkoxyalkyl, alkylsulfonyl, aryl, arylthio, arylsulfinyl, alkoxycarbonyl, arylsulfonyl, carboxylic acid, halogen, cyano, or alkyl substituted with one or more sulfonic acid, carboxylic acid, halogen, nitro, cyano, diazo or epoxy moieties; or any two R substituents taken together are an alkylene or alkenylene group completing a 3, 4, 5, 6 or 7 membered aromatic or alicyclic carbon ring or multiples thereof, which ring or rings may include one or more divalent heteroatoms of nitrogen, sulfur, sulfinyl, sulfonyl or oxygen.

6. Process according to any one of claims 1 to 5 wherein the acid of step a) is p-toluene sulfonic acid, dodecylbenzene sulfonic acid, naphtalene disulfonic acid or naphtalene sulfonic acid.

7. Process according to claims 1 to 4 wherein the acid of step a) is a polymeric backbone from which depends a plurality of acid functions A as defined in claim 5.

8. Process according to claim 7 wherein the acid is a sulfonated polystyrene or a sulfonated polyethylene.

9. Process according to any one of the preceding claims wherein the oxidant is chosen among ammonium persulfate, potassium persulfate and sodium persulfate.

10. Process according to any one of the preceding claims wherein the acid in step d) is the same as the one used to make the anilinium salt of step a).

## Patentansprüche

1. Verfahren zur Herstellung einer leitfähigen Fluorpolymerzusammensetzung, bei dem man:
a) eine wäßrige Lösung eines aus Anilin oder einem substituierten Anilin, Wasser und einer Säure hergstellten Aniliniumsalzes mit einer wäßrigen Dispersion eines Fluorpolymers vermischt;
b) dann die Mischung aus Schritt a) mit einem Oxidationsmittel versetzt, wobei man einen Blend aus dem Fluorpolymer und dotiertem Polyanilin (PANI) erhält;
c) Nebenprodukte und nicht umgesetztes Anilin durch Waschen mit Wasser oder einem Alkohol entfernt, wobei man einen Blend aus gereinigtem Fluorpolymer und dotiertem PANI erhält;
d) gegebenenfalls das gereinigte Fluorpolymer und dotierte PANI aus Schritt c) mit einer Säure vermischt und
e) aus dem gereinigten Fluorpolymer und dotierten PANI aus Schritt c) bzw. d) gegebenenfalls Wasser entfernt und das verbleibende Pulver aufschmilzt und zu Folien, Pellets oder einem beliebigen Objekt formt.

2. Verfahren nach Anspruch 1, bei dem man das Fluorpolymer unter Homopolymeren von Vinylidenfluorid (VF2) und Copolymeren von Vinylidenfluorid (VF2) mit mindestens 50 Gew.-% VF2 auswählt, wobei man das Copolymer unter Chlortrifluorethylen (CTFE), Hexafluorpropylen (HFP), Trifluorethylen (VF3) und Tetrafluorethylen (TFE) auswählt.

3. Verfahren nach Anspruch 1 oder 2, bei dem das substituierte Anilin die Formel (1) hat: 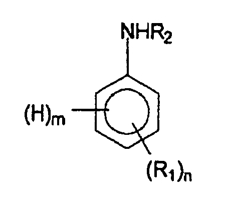 worin:
• n für eine ganze Zahl von 0 bis 5 steht;
• m für eine ganze Zahl von 0 bis 5 steht, mit der Maßgabe, daß die Summe von n und m gleich 5 ist, und mit der weiteren Maßgabe, daß mindestens eine Position am Anilinring, vorzugsweise die para-Position, mit einem Substituenten, der die Kupplung der Anilineinheiten ermöglicht, wie Halogen, Wasserstoff oder eine andere Abgangsgruppe, substituiert ist;
• R₁ aus der Gruppe bestehend aus Alkyl, Deuterium, Alkenyl, Alkoxy, Cycloalkyl, Cycloalkenyl, Alkanoyl, Alkylthio, Aryloxy, Alkylthioalkyl, Alkylaryl, Arylalkyl, Amino, Alkylamino, Dialkylamino, Arylamino, Diarylamino, Alkylarylamino, Aryl, Alkylsulfinyl, Aryloxyalkyl, Alkylsulfinylalkyl, Alkoxyalkyl, Phosphonsäure, Alkylsulfonyl, Arylthio, Alkylsulfonylalkyl, Borsäure, Phosphorsäure, Sulfinatsalzen, Arylsulfinyl, Alkoxycarbonyl, Arylsulfonyl, Carbonsäure, Phosphonsäure, Halogen, Hydroxy, Cyano, Sulfinsäure, Carboxylatsalzen, Boratsalzen, Phosphatsalzen, Sulfonatsalzen, Phosphinatsalzen, Phosphonatsalzen, Phosphonsäure, Sulfonsäure, Nitro, Alkylsilan, oder einer der vorhergehenden Arylgruppen, aliphatischen oder cycloaliphatischen Gruppen, die mit einer oder mehreren Phosphonsäure-, Sulfonsäure-, Phosphorsäure-, Borsäure-, Carboxylatsalz-, Boratsalz-, Sulfonatsalz-, Phosphinatsalz-, Phosphonatsalz-, Phosphatsalz-, Phosphinsäure-, Carbonsäure-, Halogen-, Nitro-, Amino-, Alkylamino-, Dialkylamino-, Arylamino-, Diarylamino-, Alkylarylamino-, Cyano- oder Epoxidgruppierungen substituiert sind, ausgewählt ist; oder zwei beliebige Gruppen R₁ gemeinsam oder eine beliebige Gruppe R₂ gemeinsam mit einer beliebigen Gruppe R₂ eine substituierte oder unsubstituierte Alkylen-, Alkenylen- oder Alkinylenkette bilden können, welche einen 3-, 4-, 5-, 6-, 7-, 8-, 9- oder 10-gliedrigen aromatischen, heteroaromatischen, heteroalicyclischen oder alicyclischen Ring vervollständigt, welcher gegebenenfalls ein oder mehrere zweiwertige Stickstoff-, Schwefel-, Sulfinylester-, Carbonyl-, Sulfonyl- oder Sauerstoffatome enthalten kann, wobei als Subtituenten eine oder mehrere Phosphonsäure-, Sulfonsäure-, Phosphorsäure-, Borsäure-, Carboxylatsalz-, Boratsalz-, Sulfonatsalz-, Phosphinatsalz-, Phosphonatsalz-, Phosphatsalz-, Phosphinsäure-, Carbonsäure-, Halogen-, Nitro-, Amino-, Alkylamino-, Dialkylamino-, Arylamino-, Diarylamino-, Alkylarylamino-, Cyano- oder Epoxidgruppierungen zulässig sind; oder R₁ für eine aliphatische Gruppierung mit Wiederholungseinheiten der Formel:
- (OCH₂CH₂)_{q}O-CH₃
- (OCH₂CH (CH₃))_{q}O-CH₃
- (CH₂)_{q}-CF₃
- (CF₂)_{q}-CF₃
- (CH₂)_{q}-CH₃
worin q eine positive ganze Zahl bedeutet, steht; und R₂ aus der Gruppe bestehend aus zulässigen R₁-Substituenten oder Wasserstoff ausgewählt ist.

4. Verfahren nach Anspruch 1 oder 2, bei dem man das substituierte Anilin unter 2-Cyclohexylanilin, 2-Acetylanilin, Anilin, 2,5-Dimethylanilin, o-Toluidin, 2,3-Dimethylanilin, 4-Propanoylanilin, 4-Benzylanilin, 2-(Methylamino)anilin, 4-Aminoanilin, 2-(Dimethylamino)anilin, 2-Methylthiomethylanilin, 2-Methyl-4-methoxycarbonylanilin, 4-(2,4-Dimethylphenyl)anilin, N-Ethylanilin, 2-Ethylthioanilin, 4-Carboxyanilin, N-Methylanilin, N-Propyl-m-toluidin, 2,4-Dimethylanilin, N-Methylo-cyanoanilin, N-Propylanilin, 2,5-Dibutylanilin, N-Hexylanilin, 2,5-Dimethoxyanilin, m-Toluidin, Tetrahydronaphthylamin, o-Ethylanilin, o-Cyanoanilin, m-Ethylanilin, 2-Methylthioanilin, o-Ethoxyanilin, 2,5-Dichloranilin, m-Butylanilin, 3-(n-Butansulfonsäure)anilin, m-Hexylanilin, m-Octylanilin, 3-Propoxymethylanilin, 4-Bromanilin, 2,4-Dimethoxyanilin, 2-Bromanilin, 4-Mercaptoanilin, 3-Bromanilin, 4-Ethylthioanilin, 3-Acetamidoanilin, 3-Phenoxyanilin, 4-Acetamidoanilin, 4-Phenoxyanilin, 5-Chlor-2-methoxyanilin, N-Octyl-m-toluidin, 5-Chlor-2-ethoxyanilin, 4-Trimethylsilylanilin, N-Hexyl-m-toluidin, 3-Aminocarbazol, 4-Phenylthioanilin, N-(p-Aminophenyl)anilin, 3-Amino-9-methylcarbazol und 4-Aminocarbazol auswählt.

5. Verfahren nach einem der vorhergehenden Ansprüche, bei dem man die Säure aus Schritt a) unter den folgenden Säuren der Formel:
(2) A-R₃
und (3) 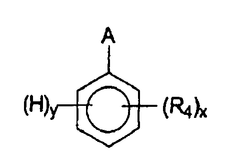 auswählt,
worin:
• A für Sulfonsäure, Selensäure, Phosphonsäure oder eine Carbonsäuregruppe oder Hydrogensulfat, Hydrogenselenat oder Hydrogenphosphat steht;
• x für eine ganze Zahl von 0 bis 5 steht;
• y für eine ganze Zahl von 0 bis 4 steht, mit der Maßgabe, daß die Summe von x und y gleich 5 ist;
• R₃ für Alkyl, Alkenyl, Alkoxy, Alkanoyl, Alkylthio, Alkylthioalkyl mit 1 bis 20 Kohlenstoffatomen oder Alkylaryl, Arylalkyl, Alkylsulfinyl, Alkoxyalkyl, Alkylsulfonyl, Alkoxycarbonyl, Carbonsäure, wobei das Alkyl oder Alkoxy 1 bis 20 Kohlenstoffatome aufweist, oder Alkyl mit 3 bis 20 Kohlenstoffatomen, das durch eine oder mehrere Sulfonsäure-, Carbonsäure-, Halogen-, Nitro-, Cyano-, Diazo- oder Epoxidgruppierungen substituiert ist, oder einen substituierten oder unsubstituierten 3-, 4-, 5-, 6- oder 7-gliedrigen aromatischen oder alicyclischen Kohlenstoffring, der ein oder mehr zweiwertige Stickstoff-, Schwefel-, Sulfinyl-, Sulfonyl- oder Sauerstoff-Heteroatome enthalten kann, wie Thiophenyl, Pyrrolyl, Furanyl oder Pyridinyl, steht;
• R₄ jeweils gleich oder verschieden ist und für Alkyl, Alkenyl, Alkoxy, Cycloalkyl, Cycloalkenyl, Alkanoyl, Alkylthio, Aryloxy, Alkylthioalkyl, Alkylaryl, Arylalkyl, Alkylsulfinyl, Alkoxyalkyl, Alkylsulfonyl, Aryl, Arylthio, Arylsulfinyl, Alkoxycarbonyl, Arylsulfonyl, Carbonsäure, Halogen, Cyano oder durch eine oder mehrere Sulfonsäure-, Carbonsäure-, Halogen-, Nitro-, Cyano-, Diazo- oder Epoxidgruppierungen substituiertes Alkyl steht oder zwei beliebige Substituenten R gemeinsam eine Alkylen- oder Alkenylengruppe bilden können, welche einen 3-, 4-, 5-, 6-, oder 7-gliedrigen aromatischen oder alicyclischen Kohlenstoffring oder Vielfache davon vervollständigt, wobei der Ring bzw. die Ringe ein oder mehr zweiwertige Stickstoff-, Schwefel-, Sulfinyl-, Sulfonyl- oder Sauerstoff-Heteroatome enthalten können.

6. Verfahren nach einem der Ansprüche 1 bis 5, bei dem es sich bei der Säure aus Schritt a) um p-Toluolsulfonsäure, Dodecylbenzolsulfonsäure, Naphthalindisulfonsäure oder Naphthalinsulfonsäure handelt.

7. Verfahren nach einem der Ansprüche 1 bis 4, bei dem es sich bei der Säure aus Schritt a) um eine polymere Hauptkette mit mehreren anhängenden Säurefunktionen A gemäß Anspruch 5 handelt.

8. Verfahren nach Anspruch 7, bei dem es sich bei der Säure um ein sulfoniertes Polystyrol oder ein sulfoniertes Polyethylen handelt.

9. Verfahren nach einem der vorhergehenden Ansprüche, bei dem man das Oxidationsmittel unter Ammoniumpersulfat, Kaliumpersulfat und Natriumpersulfat auswählt.

10. Verfahren nach einem der vorhergehenden Ansprüche, bei dem die Säure in Schritt d) die gleiche ist wie die zur Herstellung des Aniliniumsalzes aus Schritt a) verwendete.

## Revendications

1. Procédé de préparation d'une composition conductrice d'un polymère fluoré dans lequel :
a) une solution aqueuse d'un sel d'anilinium, qui est préparée à partir de l'aniline ou d'une aniline substituée, d'eau et d'un acide, est mélangée avec une dispersion aqueuse d'un polymère fluoré ;
b) puis un oxydant est ajouté au mélange de l'étape a) pour produire un mélange homogène dudit polymère fluoré et d'une polyaniline dopée (PANI) ;
c) les produits secondaires et l'aniline n'ayant pas réagi sont éliminés par lavage avec de l'eau ou un alcool en vue d'obtenir un mélange homogène du polymère fluoré purifié et de la PANI dopée ;
d) le polymère fluoré purifié et la PANI dopée de l'étape c) sont éventuellement mélangés avec un acide ;
e) l'eau est éliminée du polymère fluoré purifié et de la PANI dopée de l'étape c) ou d), s'il y en a, et la poudre restante est fondue et mise en forme de films, pastilles ou tout objet.

2. Procédé selon la revendication 1, dans lequel le polymère fluoré est choisi parmi des homopolymères et des copolymères de fluorure de vinylidène (VF2), renfermant au moins 50 % en poids de VF2, le copolymère étant choisi parmi le chlorotrifluoroéthylène (CTFE), l'hexafluoropropylène (HFP), le trifluoroéthylène (VF3) et le tétrafluoroéthylène (TFE).

3. Procédé selon l'une quelconque des revendications 1 ou 2, dans lequel l'aniline substituée est de formule (1) 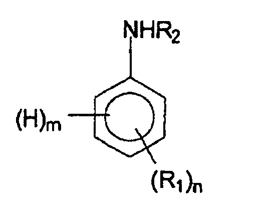 dans laquelle :
• n est un entier valant de 0 à 5 ;
• m est un entier valant de 0 à 5, à condition que la somme de n et de m soit égale à 5 et à la condition supplémentaire qu'au moins une position sur le noyau aniline, de préférence en position para, soit substituée par un substituant qui permettra le couplage des motifs aniline, tel qu'un groupe halogéno, un atome d'hydrogène ou un autre groupe partant ;
• R₁ est choisi parmi le groupe constitué d'un groupe alkyle, d'un groupe deutérium, d'un groupe alcényle, d'un groupe alcoxy, d'un groupe cycloalkyle, d'un groupe cycloalcényle, d'un groupe alcanoyle, d'un groupe alkylthio, d'un groupe aryloxy, d'un groupe alkylthioalkyle, d'un groupe alkylaryle, d'un groupe arylalkyle, d'un groupe amino, d'un groupe alkylamino, d'un groupe dialkylamino, d'un groupe arylamino, d'un groupe diarylamino, d'un groupe alkylarylamino, d'un groupe aryle, d'un groupe alkylsulfinyle, d'un groupe aryloxyalkyle, d'un groupe alkylsulfinylalkyle, d'un groupe alcoxyalkyle, d'un groupe acide phosphonique, d'un groupe alkylsulfonyle, d'un groupe arylthio, d'un groupe alkylsulfonylalkyle, d'un groupe acide borique, d'un groupe acide phosphorique, de sels de sulfinate, d'un groupe arylsulfinyle, d'un groupe alcoxycarbonyle, d'un groupe arylsulfonyle, d'un groupe acide carboxylique, d'un groupe acide phosphonique, d'un groupe halogéno, d'un groupe hydroxy, d'un groupe cyano, d'un groupe acide sulfinique, de sels de carboxylate, de sels de borate, de sels de phosphate, de sels de sulfonate, de sels de phosphinate, de sels de phosphonate, d'un groupe acide phosphonique, d'un groupe acide sulfonique, d'un groupe nitro, d'un groupe alkylsilane, ou de l'un quelconque des groupes aryle, aliphatiques ou cycloaliphatiques précédents, substitué par un ou plusieurs fragments acide phosphonique, acide sulfonique, acide phosphorique, acide borique, sel de carboxylate, sel de borate, sel de sulfonate, sel de phosphinate, sel de phosphonate, sel de phosphate, acide phosphinique, acide carboxylique, halogéno, nitro, amino, alkylamino, dialkylamino, arylamino, diarylamino, alkylarylamino, cyano ou époxy ; ou deux groupes R₁ quelconques conjointement ou un groupe R₂ quelconque conjointement avec un groupe R₂ quelconque peuvent former une chaîne alkylène, alcénylène ou alcynylène substituée ou non-substituée, complétant un noyau aromatique, hétéroaromatique, hétéroalicyclique ou alicyclique à 3, 4, 5, 6, 7, 8, 9 ou 10 chaînons, lequel noyau peut éventuellement renfermer un ou plusieurs atomes bivalents d'azote, de soufre, de sulfinyle, d'ester, de carbonyle, de sulfonyle ou d'oxygène, où les substituants permis sont un ou plusieurs fragments acide phosphonique, acide sulfonique, acide phosphorique, acide borique, sel de carboxylate, sel de borate, sel de sulfonate, sel de phosphinate, sel de phosphonate, sel de phosphate, acide phosphinique, acide carboxylique, halogéno, nitro, amino, alkylamino, dialkylamino, arylamino, diarylamino, alkylarylamino, cyano ou époxy ; ou R₁ est un fragment aliphatique renfermant des motifs récurrents de formules :
- (OCH₂CH₂)_{q}O-CH₃
-(OCH₂CH(CH₃))_{q}O-CH₃
- (CH₂)_{q}CF₃
-(CF₂)_{q}CF₃
- (CH₂)_{q}CH₃
dans lesquelles q est un entier positif et R₂ est choisi parmi le groupe constitué des R₁ permis ou de substituants hydrogène.

4. Procédé selon l'une quelconque des revendications 1 ou 2, dans lequel l'aniline substituée est choisie parmi la 2-cyclohexylaniline, la 2-acétylaniline, l'aniline, la 2,5-diméthylaniline, l'o-toluidine, la 2,3-diméthylaniline, la 4-propanoylaniline, la 4-benzylaniline, la 2-(méthylamino)aniline, la 4-aminoaniline, la 2-(diméthylamino)aniline, la 2-méthylthiométhylaniline, la 2-méthyl-4-méthoxy-carbonylaniline, la 4-(2,4-diméthylphényl)aniline, la N-éthylaniline, la 2-éthylthioaniline, la 4-carboxyaniline, la N-méthylaniline, la N-propyl-m-toluidine, la 2,4-diméthylaniline, la N-méthyl-o-cyanoaniline, la N-propylaniline, la 2,5-dibutylaniline, la N-hexylaniline, la 2,5-diméthoxyaniline, la m-toluidine, la tétrahydronaphtylamine, l'o-éthylaniline, l'o-cyanoaniline, la m-éthylaniline, la 2-méthylthioaniline, l'o-éthoxyaniline, la 2,5-dichloroaniline, la m-butylaniline, la 3-(acide n-butanesulfonique)-aniline, la m-hexylaniline, la m-octylaniline, la 3-propoxy-méthylaniline, la 4-bromoaniline, la 2,4-diméthoxyaniline, la 2-bromoaniline, la 4-mercaptoaniline, la 3-bromoaniline, la 4-éthylthioaniline, la 3-acétamidoaniline, la 3-phénoxyaniline, la 4-acétamidoaniline, la 4-phénoxyaniline, la 5-chloro-2-méthoxy-aniline, la N-octyl-m-toluidine, la 5-chloro-2-éthoxy-aniline, la 4-triméthylsilylaniline, la N-hexyl-m-toluidine, le 3-aminocarbazole, la 4-phénylthio-aniline, la N-(p-aminophényl)aniline, le 3-amino-9-méthylcarbazole, le 4-aminocarbazole.

5. Procédé selon l'une quelconque des revendications précédentes, dans lequel l'acide de l'étape a) est choisi parmi les acides suivants de formules :
(2) A--R₃
et (3) 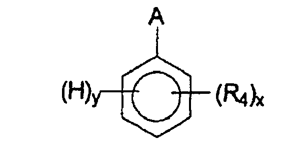 dans lesquelles :
• A est un groupe acide sulfonique, un groupe acide sélénique, un groupe acide phosphonique ou un groupe acide carboxylique ; ou un groupe hydrogéno-sulfate, un groupe hydrogéno-sélénate, un groupe hydrogéno-phosphate ;
• x est un entier valant de 0 à 5 ;
• y est un entier valant de 0 à 4, à condition que la somme de x et de y vaille 5 ;
• R₃ est un groupe alkyle, un groupe alcényle, un groupe alcoxy, un groupe alcanoyle, un groupe alkylthio, un groupe alkylthioalkyle, renfermant de 1 à 20 atomes de carbone ; ou un groupe alkylaryle, un groupe arylalkyle, un groupe alkylsulfinyle, un groupe alcoxyalkyle, un groupe alkylsulfonyle, un groupe alcoxycarbonyle, un groupe acide carboxylique, où le groupe alkyle ou le groupe alcoxy renferment de 1 à 20 atomes de carbone; ou un groupe alkyle renfermant de 3 à 20 atomes de carbone, substitués par un ou plusieurs fragments acide sulfonique, acide carboxylique, halogéno, nitro, cyano, diazo ou époxy ; ou un noyau carboné aromatique ou alicyclique, substitué ou non-substitué, à 3, 4, 5, 6 ou 7 chaînons, lequel noyau peut renfermer un ou plusieurs hétéroatomes bivalents d'azote, de soufre, de sulfinyle, de sulfonyle ou d'oxygène, tel qu'un groupe thiophényle, un groupe pyrrolyle, un groupe furanyle, un groupe pyridinyle ;
• R₄ est identique ou différent dans chaque cas, et est un groupe alkyle, un groupe alcényle, un groupe alcoxy, un groupe cycloalkyle, un groupe cycloalcényle, un groupe alcanoyle, un groupe alkylthio, un groupe aryloxy, un groupe alkylthioalkyle, un groupe alkylaryle, un groupe arylalkyle, un groupe alkylsulfinyle, un groupe alcoxyalkyle, un groupe alkylsulfonyle, un groupe aryle, un groupe arylthio, un groupe arylsulfinyle, un groupe alcoxycarbonyle, un groupe arylsulfonyle, un groupe acide carboxylique, un groupe halogéno, un groupe cyano, ou un groupe alkyle substitué par un ou plusieurs fragments acide sulfonique, acide carboxylique, halogéno, nitro, cyano, diazo ou époxy ; ou deux substituants R quelconques, pris conjointement, sont un groupe alkylène ou un groupe alcénylène complétant un noyau carboné aromatique ou alicyclique à 3, 4, 5, 6 ou 7 chaînons, ou des multiples de celui-ci, lequel ou lesquels noyau(x) peuvent comprendre un ou plusieurs hétéroatomes bivalents d'azote, de soufre, de sulfinyle, de sulfonyle ou d'oxygène.

6. Procédé selon l'une quelconque des revendications 1 à 5 dans lequel l'acide de l'étape a) est l'acide p-toluènesulfonique, l'acide dodécyl-benzènesulfonique, l'acide naphtalènedisulfonique ou l'acide naphtalènesulfonique.

7. Procédé selon les revendications 1 à 4, dans lequel l'acide de l'étape a) est un squelette polymère duquel dépendent plusieurs fonctions acides A telles que définies dans la revendication 5.

8. Procédé selon la revendication 7, dans lequel l'acide est un polystyrène sulfoné ou un polyéthylènesulfoné.

9. Procédé selon l'une quelconque des revendications précédentes, dans lequel l'oxydant est choisi parmi le persulfate d'ammonium, le persulfate de potassium et le persulfate de sodium.

10. Procédé selon l'une quelconque des revendications précédentes, dans lequel l'acide de l'étape d) est le même que celui utilisé pour préparer le sel d'anilinium de l'étape a).
